# EUROPÄISCHE PATENTANMELDUNG

(11) **EP 0 621 699 A1**
(43) Veröffentlichungstag der Anmeldung: **26.10.1994**
(21) Anmeldenummer: 94105685.5
(22) Anmeldetag: 13.04.1994
(51) Int. Cl.: H04B 10/16

(54) **Optisches Übertragungssystem mit faseroptischen Verstärkern**

(30) Priorität: 19.04.1993 CH 1178/93
(71) Anmelder: ASCOM TECH AG, CH-3018 Bern (CH)
(72) Erfinder: Wang, Yu, Dr., CH-1700 Fribourg (CH)
(74) Vertreter: Schwerdtel, Eberhard, Dr.

(57) **Zusammenfassung**

Die Anordnung ist in eine Lichtleitfaser (13.1, 13.2) eingefügt, auf der unabhängige Lichtstrahlen zweier unterschiedlicher Wellenlängen und unterschiedlicher Richtung laufen. Die Anordnung weist vier gerichtete Faserverstärker (21, 121, 23, 123) auf, die einzeln in Teilfasern (29, 129, 229, 329) eingefügt sind, zwei Strahlteiler (17, 117) als Wellenlängen-Multiplexer/Demultiplexer und vier Richtungskoppler (19, 119, 219, 319). Hierzu kommen ein Pumplaser (25) und ein diesem nachgeschalteter Lichtteiler (27). Der Pumplaser (25) pumpt über den Lichtteiler (27) und die Lichtleiter (28, 128, 228, 328) gleichzeitig und gemeinsam alle Faserverstärker (21, 121, 23, 123).

Die einen Faserverstärker (21, 121) sind mit Neodym dotiert und verstärken Licht von 1,3 µm, die anderen Faserverstärker (23, 123) sind mit Erbium dotiert zur Verstärkung von 1,5 µm Licht.

## Beschreibung

Die Erfindung betrifft eine Anordnung zum Übertragen von Information mittels voneinander unabhängiger Lichtstrahlen über eine einzige, allen Lichtstrahlen gemeinsame Lichtleitfaser entsprechend dem Oberbegriff von Anspruch 1.

Aus der Schrift US 5 083 874 ist ein optisches Faserkabel mit Lichtleitfasern bekannt, über die optische Signale zwischen jeweils einem Sender und einem mehrere hundert Kilometer entfernten Empfänger übertragbar sind. Die Signale werden durch seriell angeordnete, optische Verstärker verstärkt. Hierzu dienen mit seltenen Erden dotierte Fasern, die vom jeweiligen Signal durchlaufen und durch eine Pumplichtquelle optisch gepumpt werden. Das Pumplicht wird hierbei über optische Koppler in Vorwärts- oder Rückwärtsrichtung direkt in die dotierten Fasern eingegeben. Zum Optimieren dieses Vorgangs kann der Pumplichtquelle ein Lichtteiler zum Aufteilen des Pumplichtes nachgeschaltet sein, wodurch sich die verschiedenen Teile des Pumplichtes an unterschiedlichen Stellen in die dotierten Fasern einspeisen lassen.

Welche Eigenschaften optische Verstärker aufweisen und welche Schwierigkeiten bestehen, lässt sich beispielsweise den Artikeln Y. Miyajima: Progress towards a practical 1.3 µm optical fiber amplifier; IEE Electronics Letters, 24. Oct. 1991 und Y. Kimura et. al.: High gain Erbium-doped fiber amplifier pumped in the 0.8 µm pump band; ECOC '90-103 entnehmen.

Aus der Schrift US 5 066 148 ist ein bidirektionales optisches Übertragungssystem mit einer einzigen Lichtleitfaser bekannt. Die zu übertragenden Signale durchlaufen diese Faser gegensinnig. An den Enden der Faser sind optische Koppler für die Richtungstrennung angeordnet, sowie optische Isolatoren zum Sperren des Lichtflusses in Richtung der Signalsender. Die Schrift US 5 138 675 beschreibt beispielsweise einen derartigen Isolator.

Die Schrift US 5 050 952 beschreibt schliesslich ein optisches Kommunikationssystem für Diplex- und Duplex-Übertragung von Signalen. Bei diesem System kommt eine Kombination aus Faser-Mode-Multiplex und Wellenlängen-Multiplex zur Anwendung.

Es besteht nun die generelle Aufgabe, ein preiswertes, optisches Übertragungssystem anzugeben, das für bidirektionale Übertragung von Signalen über weite Strecken geeignet ist. Insbesondere soll hierbei nur eine einzige Lichtleitfaser eingesetzt und sollen die Signale optisch verstärkt werden.

Die Lösung dieser Aufgabe ist durch den kennzeichnenden Teil von Anspruch 1 gegeben. Die abhängigen Ansprüche geben Ausgestaltungen der Erfindung an.

Im folgenden wird die Erfindung anhand von zwei Figuren beispielsweise näher beschrieben. Es zeigen:
- Fig. 1: - Blockschaltbild einer optischen Verstärkeranordnung
- Fig. 2: - Aufbau eines Faserverstärkers (Stand der Technik).

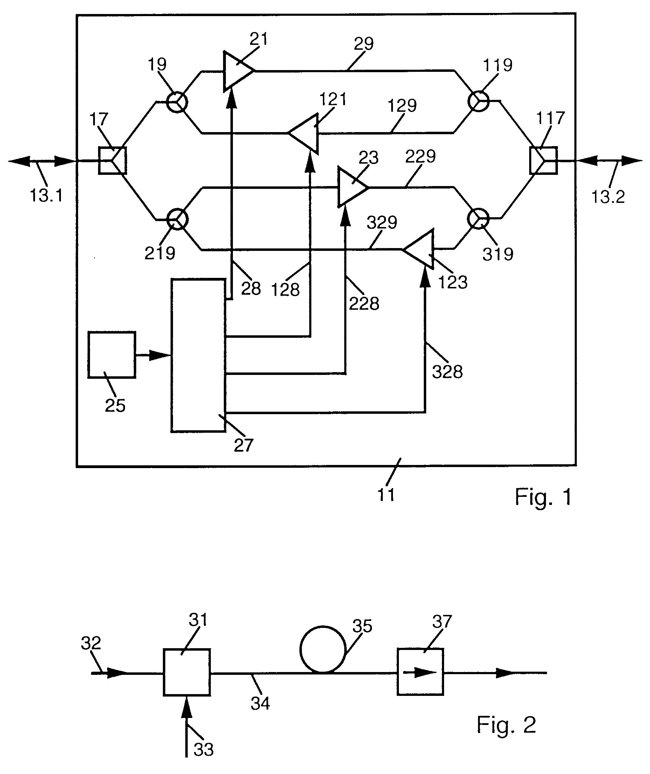

Fig. 1 zeigt das Blockschaltbild einer optischen Verstärkeranordnung 11 zum Verstärken von vier unabhängigen Lichtstrahlen, die über eine einzige, gemeinsame Lichtleitfaser 13 fliessen. Die Anordnung 11 ist in diese Faser 13 eingefügt bzw. die Faser 13 wird durch die Anordnung 11 unterbrochen und in zwei Faserabschnitte 13.1, 13.2 unterteilt.

Die Verstärkeranordnung 11 umfasst folgende Einheiten: zwei Strahlteiler 17, 117 einer ersten Sorte, vier Strahlteiler 19, 119, 219, 319 einer zweiten Sorte, zwei Faserverstärker 21, 121 einer ersten Sorte, zwei Faserverstärker 23, 123 einer zweiten Sorte, einen Pumplaser 25 und einen diesem nachgeschalteten Lichtteiler 27. Diese Einheiten sind durch Lichtleiter und Lichtleitfasern miteinander verbunden.

Die Strahlteiler 17, 117 der ersten Sorte sind Wellenlängen-Multiplexer bzw. -Demultiplexer (Wavelength Division Multiplexer WDM), je nach der Flussrichtung des Lichtes. Diese Multiplexer/Demultiplexer sind mit ihren Multiplex-Ausgängen mit den Faserabschnitten 13.1 bzw. 13.2 und mit ihren Demultiplex-Ausgängen mit den Strahlteilern 19, 219 bzw. 119, 319 der anderen Sorte verbunden.

Die Strahlteiler 19, 119, 219, 319 der zweiten Sorte sind Richtungskoppler, die mit ihren Koppel-Enden mit den Wellenlängen-Multiplexern/Demultiplexern 17, 117 verbunden sind. Die Entkoppel-Enden sind mit vier parallelen Teilfasern 29, 129, 229, 329 verbunden, in die die Faserverstärker 21, 121, 23, 123 eingefügt sind.

Die Faserverstärker 21, 121, 23, 123 weisen einen bekannten Aufbau entsprechend Fig. 2 auf. Sie besitzen einen optischen Koppler 31, über dessen Eingänge 32, 33 das zu verstärkende Lichtsignal bzw. das Pumplicht eingegeben werden. Der Ausgang 34 ist mit einer dotierten Lichtleitfaser 35 verbunden. Eine Dotierung mit Erbium ist dabei zur Verstärkung von Licht der Wellenlänge 1,5 µm geeignet, eine Dotierung mit Neodym für Licht von 1,3 µm.

Die genannten Faserverstärker 21, 121, 23, 123 können jeweils mit einem ebenfalls bekannten optischen Isolator 37 kombiniert werden, der zum Verstärker rücklaufendes Licht sperrt. Die Kombination aus eigentlichem Faserverstärker 31 plus 35 und Isolator 37 bildet damit eine gerichtete Einheit, die Licht nur in einer Richtung passieren lässt und in Fig. 1 dementsprechend durch ein Dreieckzeichen symbolisiert und mit dem Bezugszeichen 21, 121, 23, 123 bezeichnet ist.

Die beiden Faserverstärker 21, 121 sind gleich und mit Erbium dotiert. Die Faserverstärker 23, 123 sind dagegen mit Neodym dotiert. Die Verstärker 21, 121 und 23, 123 bilden hiermit zwei unterschiedliche Paare, deren Elemente gegensinnig in die Teilfasern 29, 129 bzw. 229, 329 eingefügt sind und unterschiedliche Wellenlängen von 1,5 µm bzw. 1,3 µm verstärken.

Der Pumplaser 25 versorgt über den Lichtteiler 27 und vier Lichtleiter 28, 128, 228, 328 die vier Faserverstärker 21, 121, 221, 321 gemeinsam und gleichzeitig mit Pumplicht. Der Pumplaser 25 liefert damit die für die Verstärkung der verschiedenen Faserverstärker notwendige Energie, wobei diese durchaus unterschiedliche Werte aufweisen kann.

Die Verstärkeranordnung 11 arbeitet wie folgt: Auf der Lichtleitfaser 13 laufen in jeder Richtung je ein modulierter, unabhängiger Lichtstrahl der Wellenlänge 1,5 µm und 1,3 µm. Dieses Wellenlängen- und Richtungs-Multiplex von insgesamt vier Lichtstrahlen wird durch die Strahlteiler der ersten 17, 117 und der zweiten Sorte 19, 119, 219, 319 in insgesamt vier Teilstrahlen aufgeteilt, die sich bezüglich der Flussrichtung und der Wellenlänge unterscheiden und den Teilfasern 29, 129, 229 bzw. 329 zugeordnet sind. Die Teilstrahlen werden durch jeweils einen zugeordneten Faserverstärker 21, 121, 23, 123 separat verstärkt und anschliessend wieder auf den zugeordneten, abgehenden Faserabschnitt 13.1, 13.2 multiplexiert.

Die für die Verstärkung in den Faserverstärkern 21, 121, 23, 123 notwendige Energie wird ausschliesslich durch den einzigen, allen Verstärken gemeinsam zugeordneten Pumplaser 25 geliefert. Dies bildet gegenüber einer Anordnung mit unabhängigen Faserverstärkern einen ganz wesentlichen Vorteil, da Pumplaser sehr massgeblich am Herstellungspreis von Faserverstärkern beteiligt sind. Wichtig ist hierbei die Erkenntnis, dass sich die Faserverstärker beider Sorten, d.h. sowohl die mit Erbium als auch die mit Neodym dotierten Verstärker, mit einheitlichem Licht pumpen lassen.

Die Verstärkeranordnung ist einsetzbar in Glasfasernetzen für die bidirektionale Verbindung mittels einer einzigen Faser. Hierbei kann die eine Wellenlänge, z.B. 1,5 µm für den Daten- und Sprachaustausch verwendet werden und die andere Wellenlänge 1,3 µm für die Übermittlung von Fernsehbildern.

Die Erfindung lässt sich auf mannigfaltige Art variieren. So kann z.B. auf die Frequenzmultiplexierung verzichtet werden. Hierdurch reduziert sich die Verstärkeranordnung 11 entsprechend Fig. 1 auf z.B. die Strahlteiler 19, 119, die Verstärker 21, 121 sowie den Pumplaser 25 und den Lichtteiler 27. Die anderen Strahlteiler 17, 117, 219, 319 und die anderen Verstärker 23, 123 dagegen entfallen. Es sind weiter alle sonstigen Variationen von Lichtstrahlen mit den Parametern Richtung (vor, rück), Wellenlänge (1,5 µm, 1,3 µm) und Anzahl (zwei, drei, vier) möglich. Insbesondere wird auf eine Variante mit drei Faserverstärkern hingewiesen, wobei zwei Verstärker einer ersten Sorte, z.B. 21, 121 gegensinnig in die Teilfasern 29, 129 eingefügt sind, und wobei ein Faserverstärker 23 der anderen Sorte in die Teilfaser 229 eingefügt ist. Diese Anordnung lässt sich einsetzen für ein Verteilnetz, z.B. für Fernsehübertragung, das mit einem Duplex-Datennetz vereinigt ist.

Auf die optischen Isolatoren 37 kann in gewissen Fällen verzichtet werden.

Die Art der Strahlteiler 17, 117, 19, 119, 219, 319 ist nach praktischen Gesichtspunkten auswählbar, desgleichen die Art der Faserverstärker 21, 121, 23, 123. Insbesondere ist die Art der Dotierung, insbesondere mit welchen Elementen und wie stark dotiert wird, offen. Weiter unterliegt der verwendete Pumplaser 25, der Lichtteiler 27 und die Lichtleiter 28, 128, 228, 328 keinen speziellen Bedingungen. Sie können z.B. auch durch Regeleinrichtungen bezüglich ihrer Eigenschaften stabilisiert werden.

## Patentansprüche

1. Anordnung zum Übertragen von Information mittels voneinander unabhängiger Lichtstrahlen über eine einzige, allen Lichtstrahlen gemeinsame Lichtleitfaser (13),
- mit Elementen zum Aufteilen der über die Lichtleitfaser (13) ankommenden Lichtstrahlen bzw. zum Zusammenfügen der über die Lichtleitfaser abgehenden Lichtstrahlen,
gekennzeichnet
durch eine Verstärkeranordnung (11), die in die Lichtleitfaser (13) eingefügt ist zum optischen Verstärken aller Lichtstrahlen,
- umfassend eine der Mehrzahl von Lichtstrahlen entsprechende Anzahl von zueinander parallel verlaufender Teilfasern (29, 129, 229, 329), die durch Strahlteiler (17, 117; 19, 119, 219, 319) mit ihren Enden untereinander und mit den beiden Abschnitten (13.1, 13.2) der Lichtleitfaser (13) so verbunden sind, dass jede der Teilfasern (29, 129, 229, 329) ausschliesslich von einem einzigen, zugeordneten der Lichtstrahlen durchlaufen wird,
- umfassend in jeder der Teilfasern (29, 129, 229, 329) einen eingefügten Faserverstärker (21, 121, 23, 123), und
- umfassend einen Pumplaser (25) mit nachgeschaltetem Lichtteiler (27), der alle Faserverstärker (21, 23, 121, 123) gemeinsam pumpt.

2. Anordnung nach Anspruch 1,
dadurch gekennzeichnet,
dass jeder Faserverstärker (21, 23, 121, 123) aufgebaut ist aus einer dotierten Faser (35) und einem zugeordneten Optokoppler (31).

3. Anordnung nach Anspruch 2,
dadurch gekennzeichnet,
dass jeder Faserverstärker (21, 23, 121, 123) zusätzlich einen optischen Isolator (37) aufweist, der richtungsgerecht in Reihe mit der dotierten Faser (35) und dem Optokoppler (31) angeordnet ist.

4. Anordnung nach Anspruch 1,
dadurch gekennzeichnet,
- dass eine erste Sorte von Strahlteilern (17, 117) vorgesehen ist, die als Wellenlängen-Multiplexer/Demultiplexer ausgebildet ist, und
- dass eine zweite Sorte von Strahlteilern (19, 119, 219, 319) vorgesehen ist, die als Richtungskoppler ausgebildet ist.

5. Anordnung nach Anspruch 1,
dadurch gekennzeichnet,
- dass vier Teilfasern (29, 129, 229, 329) und zwei Paare Faserverstärker (21, 121; 23, 123) unterschiedlicher Sorte vorgesehen sind, und
- dass die Faserverstärker (21, 121 bzw. 23, 123) jedes Paares zueinander gegensinnig in die Teilfasern (29, 129, 229, 329) eingefügt sind.

6. Anordnung nach Anspruch 1,
dadurch gekennzeichnet,
- dass drei Teilfasern (29, 129, 229), ein Paar Faserverstärker (21, 121) einer ersten Sorte und ein Faserverstärker (23) einer zweiten Sorte vorgesehen sind,
- wobei die Faserverstärker (21, 121) der ersten Sorte gegensinnig in zwei Teilfasern (29, 129) und der Faserverstärker (23) der zweiten Sorte in die dritte Teilfaser (229) eingefügt sind.

7. Anordnung nach Anspruch 1,
dadurch gekennzeichnet,
dass ein Regler vorgesehen ist, der das Pumpen der Faserverstärker (21, 23, 121, 123) regelt.

8. Anordnung nach Anspruch 5 oder 6 sowie 3,
dadurch gekennzeichnet,
dass die Faserverstärker (21, 121) der ersten Sorte eine mit Erbium dotierte Faser (35) und die Faserverstärker (23, 123) der zweiten Sorte eine mit Neodym dotierte Faser aufweisen.
